# FASCICULE DE BREVET EUROPEEN

(11) **EP 1 902 952 B1**
(45) Date de publication et mention de la délivrance du brevet: **02.11.2011**
(21) Numéro de dépôt: 07290992.2
(22) Date de dépôt: 09.08.2007
(51) Int. Cl.: B64D 29/08, F01D 25/24, F02K 3/06

(54) **Conduite de soufflante pour une turbomachine**
Bläserkanal für eine Strömungsmaschine
Fan duct for a turbomachine

(30) Priorité: 20.09.2006 FR 0608217
(43) Date de publication de la demande: 26.03.2008
(73) Titulaire: SNECMA, 75015 Paris (FR)
(72) Inventeur: Beutin, Bruno Albert, 91000 Evry (FR); Derenes, Jacky Raphaël Michel, 77550 Moissy Cramayel (FR)
(74) Mandataire: Ramey, Daniel

(56) Documents cités:
- EP-A- 1 553 263
- EP-A- 1 568 868
- EP-A1- 0 028 970
- US-A- 2 421 689

## Description

La présente invention concerne une conduite de soufflante pour une turbomachine telle qu'un turboréacteur d'avion.

La conduite de soufflante (souvent appelée « fan duct ») d'une turbomachine fait partie de la nacelle et s'étend autour du moteur de la turbomachine, entre la soufflante et la tuyère d'échappement.

Elle comprend deux parois sensiblement cylindriques qui s'étendent l'une à l'intérieur de l'autre et délimitent entre elles un espace annulaire d'écoulement d'une partie de l'air aspiré par la soufflante, appelé flux froid ou flux secondaire. L'autre partie de l'air aspiré par la soufflante pénètre dans le moteur de la turbomachine qui comprend d'amont en aval un compresseur, une chambre de combustion et une turbine, et forme le flux chaud ou flux primaire.

La paroi interne de la conduite est fixée à son extrémité amont sur un carter intermédiaire de la turbomachine, et est reliée à son extrémité aval à un carter d'échappement. Elle est conformée pour envelopper avec une faible distance radiale le moteur de la turbomachine et peut avoir une forme en tonneau quand un compresseur centrifuge est utilisé dans le moteur.

La paroi externe de la conduite est fixée à son extrémité amont sur le carter intermédiaire et à son extrémité aval à l'extrémité amont d'un inverseur de poussée qui est monté autour du carter d'échappement. L'extrémité aval de la paroi externe est également reliée au carter d'échappement par des moyens de support et de centrage.

Dans la technique antérieure, la paroi interne de la conduite comprend des ouvertures d'accès à des équipements, tels notamment que des injecteurs de carburant et des vérins de commande d'aubes à calage variable, qui sont montés sur le corps de la turbomachine à l'intérieur de la paroi interne. La paroi externe comprend quant à elle des orifices de passage de servitudes qui sont logées dans des bras qui s'étendent sensiblement radialement entre les parois interne et externe de la conduite. Les ouvertures de la paroi interne de la conduite sont fermées par des panneaux fixés de manière amovible.

La paroi externe peut comporter des capots articulés qui s'ouvrent pour des opérations d'inspection ou de maintenance, ou des trappes fermées par des panneaux boulonnés, notamment quand le moteur est fixé sur le fuselage de l'avion.

Les opérations de montage de la conduite de soufflante sur le moteur sont en général longues et complexes, de même que les opérations de maintenance qui peuvent imposer un démontage plus ou moins complet de la conduite de soufflante ou du moteur.

Le document EP-A1-1 553 263 décrit par exemple une turbomachine comportant une conduite de soufflante dont la paroi externe doit être complètement retirée de la turbomachine pour pouvoir accéder aux panneaux de la paroi interne et démonter et retirer ces panneaux de la conduite de soufflante.

L'invention a notamment pour but d'apporter une solution simple, efficace et économique à ces problèmes.

Elle propose à cet effet une conduite de soufflante pour une turbomachine, comprenant deux parois cylindriques coaxiales, respectivement interne et externe, destinées à être fixées à une extrémité sur un carter intermédiaire de la turbomachine et à être reliées à leur autre extrémité à un carter d'échappement de la turbomachine, **caractérisée en ce que**, pour faciliter le montage de la conduite et permettre un accès à des équipements montés sur le corps de la turbomachine, la paroi cylindrique interne est constituée de panneaux amovibles fixés sur une ossature comprenant une structure annulaire amont, une structure annulaire aval et des éléments longitudinaux de liaison de ces structures, et en ce que la paroi cylindrique externe comporte des ouvertures fermées par des panneaux fixés de façon amovible sur une structure unitaire de support, ces ouvertures ayant des dimensions permettant le passage des panneaux de la paroi interne et le montage et le démontage de ces panneaux sur l'ossature de la paroi interne.

Selon l'invention, les pièces qui composent l'ossature de la paroi interne peuvent être mises en place et assemblées les unes aux autres et sur le corps de la turbomachine de manière à épouser au mieux la forme de ce corps. La structure de support de la paroi externe est avantageusement rigide et unitaire, ce qui permet la transmission d'efforts entre la turbomachine et l'avion équipé de cette turbomachine tout en facilitant le montage de cette paroi.

Les panneaux amovibles de la paroi interne de la conduite peuvent passer à travers les ouvertures de la paroi externe, de sorte qu'on peut les retirer sans démonter la structure de support de la paroi externe de la conduite de soufflante. Les opérations de maintenance des équipements situés à l'intérieur de la paroi interne sont plus simples et plus rapides car elles sont réalisées directement à travers les ouvertures de la paroi externe. Elles se traduisent donc par un temps relativement court d'immobilisation de l'avion équipé de la turbomachine.

Dans un mode préféré de réalisation de l'invention, la structure de support de la paroi externe comprend des anneaux amont et aval reliés rigidement par des montants longitudinaux délimitant entre eux les ouvertures précitées et qui sont par exemple au nombre de quatre et répartis à 90° les uns des autres autour de l'axe longitudinal de la paroi externe. Certains au moins de ces montants peuvent comporter des orifices de montage de bras de passage de servitudes tels que des conduits de circulation de fluide et des câbles électriques.

Avantageusement, la paroi externe comprend un autre anneau aval fixé sur la structure de support et comportant des biellettes de liaison avec le carter d'échappement de la turbomachine. Les biellettes assurent le support et le centrage du moteur, et permettent une dilatation axiale et radiale du carter d'échappement en fonctionnement.

La paroi interne de la conduite de soufflante n'est pas une pièce de transmission d'efforts et son ossature et ses panneaux amovibles sont par exemple en tôle. Les panneaux amovibles de la paroi interne sont sensiblement alignés avec les ouvertures de la paroi externe afin de faciliter les opérations de maintenance des équipements montés sur le corps de la turbomachine. Les éléments longitudinaux de liaison de l'ossature de la paroi interne comprennent des orifices de montage des bras de passage de servitudes, ces orifices étant alignés radialement avec les orifices correspondants des montants de la paroi externe.

L'invention concerne encore une turbomachine, telle qu'un turboréacteur d'avion, caractérisée en ce qu'elle comprend une conduite de soufflante telle que décrite ci-dessus.

Préférentiellement, les extrémités amont des parois interne et externe de la conduite sont fixées sur des brides annulaires du carter intermédiaire de la turbomachine, et l'extrémité aval de la paroi interne est fixée sur une bride amont du carter d'échappement par des pattes radiales laissant un espace annulaire de ventilation autour du carter d'échappement. L'extrémité aval de la paroi externe est reliée au carter d'échappement par des biellettes permettant une dilatation axiale et radiale de ce carter en fonctionnement. L'extrémité aval de la paroi externe peut également être fixée à l'extrémité amont d'un inverseur de poussée s'étendant autour du carter d'échappement.

L'invention propose également un procédé de montage d'une conduite de soufflante telle que décrite ci-dessus dans une turbomachine telle qu'un turboréacteur d'avion, ce procédé consistant :
- à fixer sur une bride du carter intermédiaire la structure annulaire amont de la paroi interne, puis à fixer sur une bride du carter d'échappement la structure annulaire aval de la paroi interne, et à relier ces structures par des éléments longitudinaux de liaison,
- puis à mettre en place la structure unitaire de support de la paroi externe, par translation axiale d'aval en amont, et à fixer l'extrémité amont de cette structure sur une bride annulaire du carter intermédiaire,
- à monter les servitudes et leurs bras de passage dans les orifices correspondants des parois interne et externe,
- à mettre en place et à fixer sur l'extrémité aval de la paroi externe l'anneau comportant les biellettes de liaison avec le carter d'échappement, puis à mettre en place et à fixer des tôles de capotage autour des biellettes sur l'extrémité aval de la paroi interne,
- à mettre en place les panneaux de la paroi interne, par passage à travers les ouvertures de la paroi externe, et à les fixer, puis à mettre en place et à fixer les panneaux de la paroi externe.

L'invention sera mieux comprise et d'autres détails, caractéristiques et avantages de la présente invention apparaîtront à la lecture de la description suivante faite à titre d'exemple non limitatif en référence aux dessins annexés dans lesquels :
- la figure 1 est une demi vue schématique partielle en coupe axiale d'un turboréacteur à double flux équipé d'une conduite de soufflante selon la technique antérieure ;
- la figure 2 est une vue schématique en perspective éclatée d'une paroi cylindrique externe d'une conduite de soufflante selon l'invention ;
- la figure 3 est une vue schématique en perspective éclatée d'une paroi cylindrique interne d'une conduite de soufflante selon l'invention ;
- la figure 4 est une vue schématique en perspective de l'ossature de la paroi interne de la figure 3 ;
- les figures 5 à 10 sont des vues schématiques en perspective d'un turboréacteur à double flux et illustrent des étapes de montage de la conduite de soufflante des figures 2 à 4 sur le corps du turboréacteur

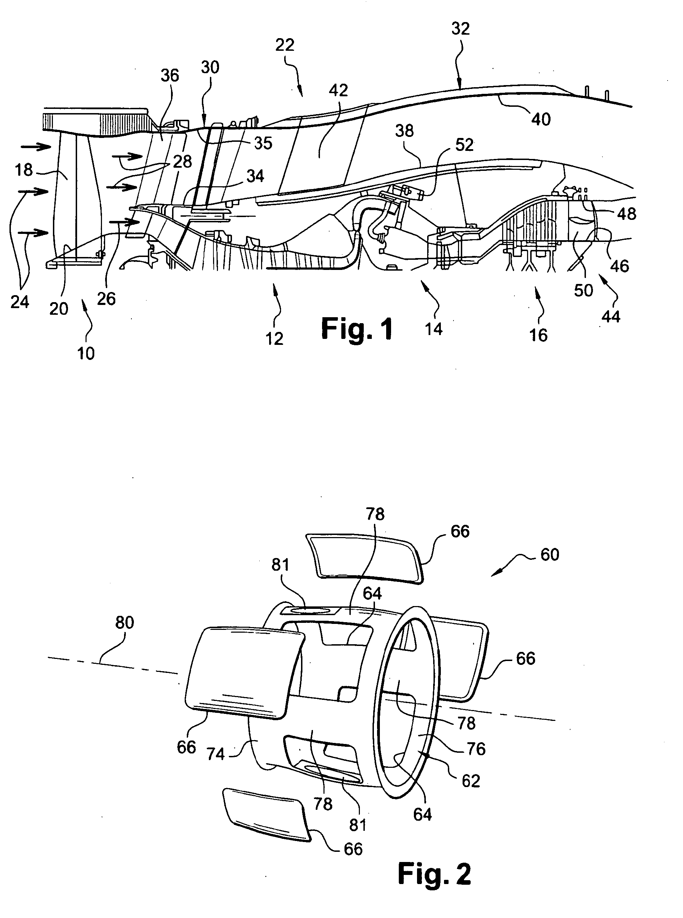

La figure 1 représente de manière schématique un turboréacteur à double flux comprenant d'amont en aval, dans le sens de l'écoulement des gaz à l'intérieur du turboréacteur, une soufflante 10, un compresseur 12, une chambre de combustion 14 et des turbines 16, ce turboréacteur étant destiné à être fixé par des moyens appropriés sous une aile d'un avion ou sur la partie arrière du fuselage d'un avion.

La soufflante 10 comprend une pluralité d'aubes 18 qui sont fixées à leurs extrémités radialement internes sur la périphérie du disque de soufflante 20 du turboréacteur qui est lui-même fixé à l'extrémité amont d'un arbre (non représenté) du turboréacteur. Les aubes de soufflante 18 sont entourées extérieurement par un carter de rétention monté à l'extrémité amont de la nacelle 22 du turboréacteur qui est sensiblement cylindrique et s'étend vers l'aval autour du compresseur 12, de la chambre de combustion 14 et des turbines 16 du turboréacteur.

Cette nacelle 22 permet de canaliser le flux d'air 24 entrant dans le turboréacteur. Une partie 26 de ce flux d'air, formant le flux primaire ou flux chaud, pénètre dans le compresseur 12, dont le dernier étage est centrifuge, puis est mélangé à du carburant et brûlé dans la chambre de combustion 14, pour être ensuite injecté dans les turbines 16 afin de fournir de l'énergie aux aubes de rotor des turbines et entraîner en rotation l'arbre du compresseur et de la soufflante.

L'autre partie 28 du flux d'air entrant dans le turboréacteur, formant le flux secondaire ou flux froid, s'écoule autour du corps du turboréacteur à l'intérieur d'un carter intermédiaire 30 puis d'une conduite de soufflante 32, et est utilisée pour alimenter des circuits de ventilation et de refroidissement et pour fournir une poussée supplémentaire s'ajoutant à celle fournie par les gaz de combustion éjectés des turbines 16.

Le carter intermédiaire 30 comprend deux viroles cylindriques 34, 35 coaxiales, respectivement interne et externe, qui sont reliées entre elles par des bras ou aubages radiaux 36.

La conduite de soufflante 32 est formée de deux parois 38, 40 sensiblement cylindriques qui s'étendent coaxialement l'une à l'intérieur de l'autre et qui sont reliées entre elles par des bras radiaux tubulaires 42 à l'intérieur desquels passent des servitudes telles que des conduits de circulation de fluides et des câbles électriques.

La paroi externe 40 de la conduite de soufflante est fixée à son extrémité amont sur l'extrémité aval de la virole externe 35 du carter intermédiaire, et à son extrémité aval sur l'extrémité amont d'un inverseur de poussée (non représenté). Sa paroi interne 38 est fixée à son extrémité amont sur l'extrémité aval de la virole interne 34 du carter intermédiaire, et à son extrémité aval sur un carter d'échappement 44 monté en sortie des turbines 16. Comme le carter intermédiaire 30, le carter d'échappement 44 comprend deux viroles cylindriques 46, 48 coaxiales, respectivement interne et externe, reliées entre elles par des aubages radiaux 50.

La paroi interne 38 de la conduite comporte des ouvertures d'accès à des équipements montés sur le corps du turboréacteur, tels que par exemple des injecteurs de carburant 52 et des vérins de commande d'aubes à calage variable, ces ouvertures d'accès étant fermées par des panneaux amovibles (non représentés).

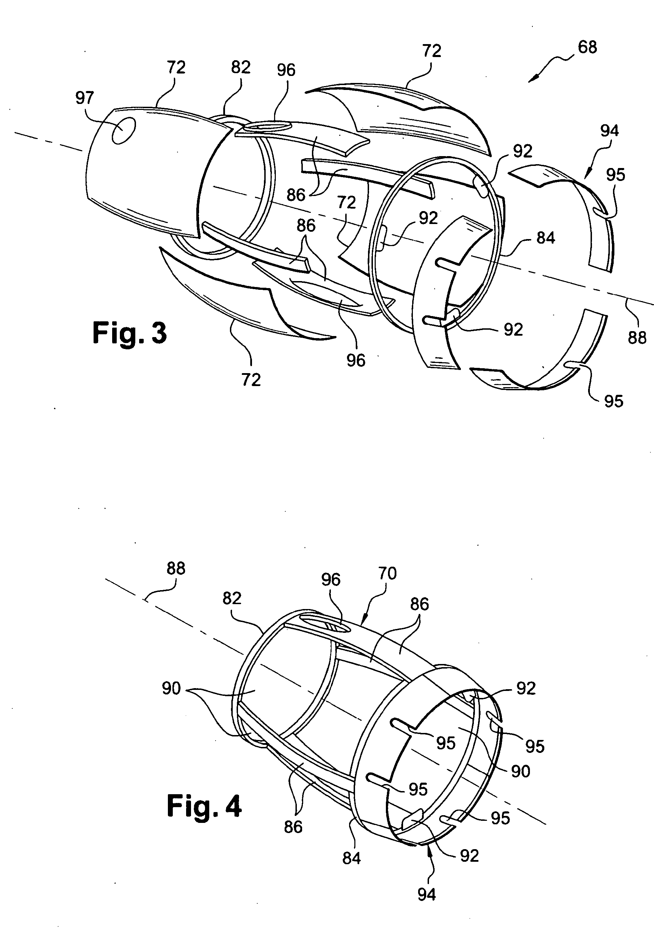

Dans le mode de réalisation de l'invention représenté aux figures 2 à 4, la paroi externe 60 (figure 2) de la conduite comprend une structure 62 de support unitaire et rigide, comportant des ouvertures 64 de grande dimension qui sont obturables par des panneaux amovibles 66, et sa paroi interne 68 (figures 3 et 4) est formée de pièces en tôle ou en matériau composite assemblées les unes aux autres pour former une ossature 70 sur laquelle sont fixées de manière amovible des panneaux 72.

La structure de support 62 de la paroi externe est sensiblement cylindrique et comprend des anneaux amont 74 et aval 76 reliés rigidement entre elles par des montants 78 de forme allongée s'étendant parallèlement à l'axe longitudinal 80 de la paroi externe, ces montants délimitant entre eux et avec les anneaux 74, 76 les ouvertures 64 précitées de la structure de support. Dans l'exemple représenté, ces montants 78 sont au nombre de quatre et sont régulièrement répartis autour de l'axe 80 pour délimiter quatre ouvertures 64 sensiblement identiques.

Deux montants longitudinaux 78 diamétralement opposés comportent des orifices 81 de montage des extrémités radialement externes de bras radiaux tubulaires (non représentés) pour le passage de servitudes.

Les panneaux amovibles 66 de la paroi externe 60 sont fixés par des vis ou des boulons sur la structure de support 62 de façon à ce que leurs faces radialement internes viennent au même niveau que la surface intérieure de la structure de support pour limiter les pertes de charge lors de l'écoulement du flux secondaire.

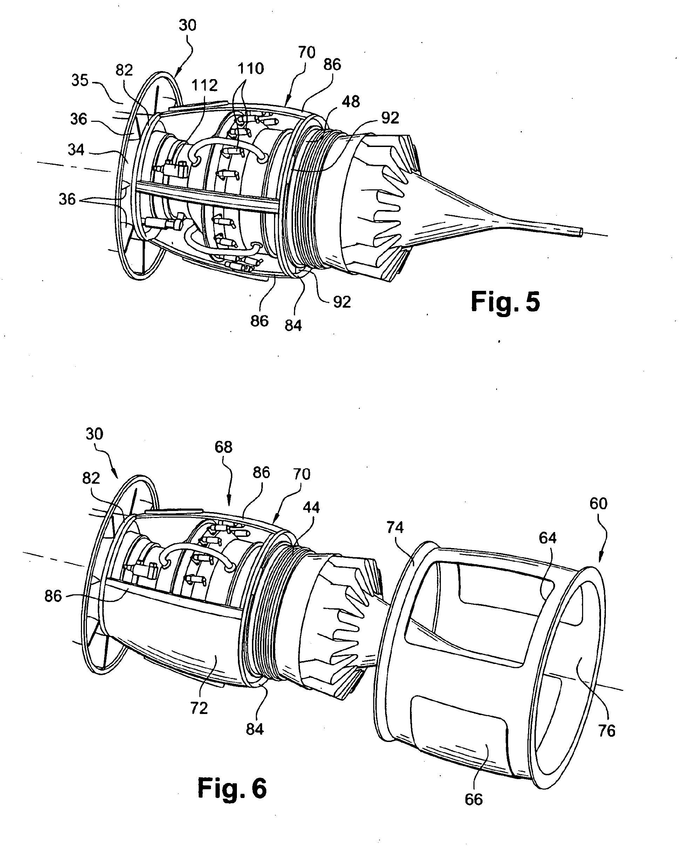

La fixation de la structure de support 62 au carter intermédiaire 30 et à l'inverseur de poussée, et sa liaison au carter d'échappement 44, seront décrites plus en détail dans ce qui suit en référence aux figures 5 à 10. Cette structure de support 62 est suffisamment rigide pour en fonctionnement, d'une part, supporter les efforts transmis par le moteur et par l'inverseur de poussée, et d'autre part, assurer la transmission d'efforts entre le turboréacteur et l'avion équipé de ce turboréacteur.

La section de la paroi interne 68 (figures 3 et 4) augmente de son extrémité amont à sa partie médiane, située au niveau de l'étage centrifuge du compresseur du turboréacteur, puis diminue jusqu'à son extrémité aval, la forme générale de la paroi interne étant en tonneau.

L'ossature 70 de la paroi interne 68 de la conduite est formée de deux structures annulaires 82, 84 coaxiales, respectivement amont et aval, qui sont reliés l'une à l'autre par des éléments 86 de forme allongée qui s'étendent parallèlement à l'axe longitudinal 88 de la paroi interne. Ces éléments délimitent entre eux et avec les structures annulaires 82, 84 des fenêtres 90 d'accès aux équipements précités montés sur le corps du turboréacteur.

Dans l'exemple représenté, ces éléments longitudinaux 86 sont au nombre de quatre et sont régulièrement répartis autour de l'axe 88 de la paroi interne de manière à former quatre fenêtres 90 sensiblement identiques, destinées à être sensiblement alignées radialement avec les ouvertures 64 de la paroi externe.

Deux de ces éléments longitudinaux 86 comportent des orifices 96 alignés radialement avec les orifices 81 de la paroi externe 60 pour le montage des extrémités radialement internes des bras radiaux de passage de servitudes.

La paroi interne 68 de la conduite comprend en outre un capotage tronconique aval 94 en tôle ou en matériau composite formé de trois secteurs dont les extrémités amont sont fixées à la structure annulaire aval 84 de l'ossature 70. Ce capotage 94 comprend à son extrémité aval des échancrures radiales 95 pour le passage de moyens de suspension du carter d'échappement 44 à la structure de support 62 de la paroi externe.

Les panneaux amovibles 72 de la paroi interne 68 sont fixés par des vis ou des boulons ou tout autre système de fixation rapide sur l'ossature 70 et certains d'entre eux comportent des trous 97 de prélèvement d'air du flux secondaire. Les dimensions de ces panneaux 72 sont telles qu'ils peuvent être démontés et retirés de la paroi interne à travers les ouvertures 64 de la paroi externe.

Comme cela sera décrit plus en détail dans ce qui suit, la structure annulaire amont 82, est destinée à être fixée sur la virole interne du carter intermédiaire 30 et la structure annulaire aval comprend des pattes radiales intérieures 92 de fixation sur la virole externe du carter d'échappement 44. Ces pattes sont par exemple au nombre de trois et sont régulièrement réparties autour de l'axe 88, à distance les unes des autres, pour laisser passer entre elles de l'air destiné à ventiler le carter d'échappement 44.

Les figures 5 à 10 illustrent des étapes du procédé de montage de la conduite de soufflante selon l'invention sur un turboréacteur à double flux.

La première étape représentée en figure 5 consiste à fixer par des moyens du type vis/écrou la structure annulaire amont 82 de la paroi interne à une bride annulaire correspondante de la virole interne 34 du carter intermédiaire 30, à fixer les pattes de fixation 92 de la structure annulaire aval 84 de la paroi interne sur des moyens correspondants prévus sur la virole externe 48 du carter d'échappement 44, puis à fixer les éléments longitudinaux 86 de liaison, à leurs extrémités sur la structure amont 82 et sur la structure aval 84. L'ossature 70 de la paroi interne est ainsi assemblée et fixée sur le corps du turboréacteur.

Le procédé consiste ensuite (figure 6) à amener la structure de support 62 de la paroi externe autour de l'ossature 70 de la paroi interne, en la déplaçant axialement depuis l'aval autour de l'ossature de la paroi interne, puis à fixer par boulonnage une bride annulaire amont de la structure de support sur une bride annulaire correspondante de la virole externe 35 du carter intermédiaire 30.

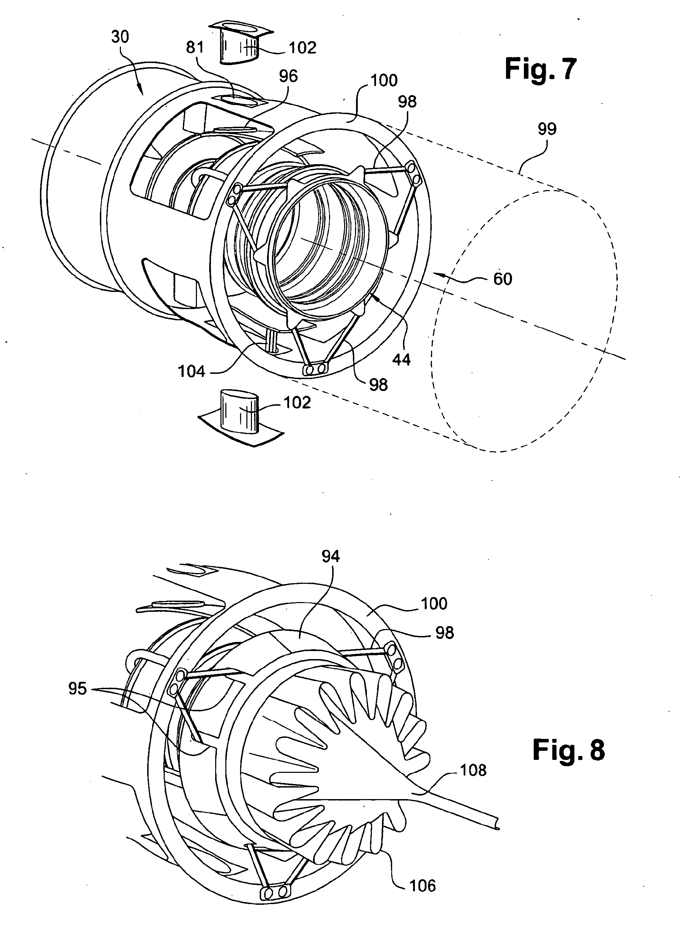

L'extrémité aval de la structure de support 62 est fixée par boulonnage à l'extrémité amont d'un inverseur de poussée, schématiquement représenté par des traits en pointillés 99 en figure 7.

L'extrémité aval de la structure de support 62 est également reliée au carter d'échappement 44 par des biellettes 98 de transmission d'efforts, ces biellettes étant fixées à une de leurs extrémités sur le carter d'échappement 44, et reliées à l'autre de leurs extrémités à un anneau 100 rapporté et fixé coaxialement à l'extrémité aval de la structure de support 62. En fonctionnement, ces biellettes 98 assurent le support et le centrage du carter d'échappement, et permettent sa dilatation axiale et radiale en fonctionnement.

Dans l'exemple représenté, les biellettes sont au nombre de six et s'étendent toutes dans un même plan transversal en étant réunies par paires, les extrémités radialement externes des biellettes de chaque paire étant à une distance circonférentielle l'une de l'autre qui est plus faible que la distance circonférentielle entre leurs extrémités radialement internes.

Des bras tubulaires 102 sont engagés radialement depuis l'extérieur dans les orifices 81 et 96 des parois externe et interne et sont fixés sur ces parois par des moyens appropriés. Des servitudes 104 peuvent être montées à l'intérieur de ces bras.

Les secteurs du capotage 94 en tôle (figure 8) sont ensuite fixés à leurs extrémités amont sur la structure annulaire aval 84 de l'ossature 70 de la paroi interne, de manière à ce que les biellettes 98 passent à travers les échancrures 95 précitées de ce capotage.

Ce capotage 94 entoure extérieurement la partie amont d'un mélangeur 106 qui est conformé pour assurer le mélange des gaz éjectés des turbines, autour d'un cône d'échappement 108, avec le flux d'air sortant de la conduite de soufflante.

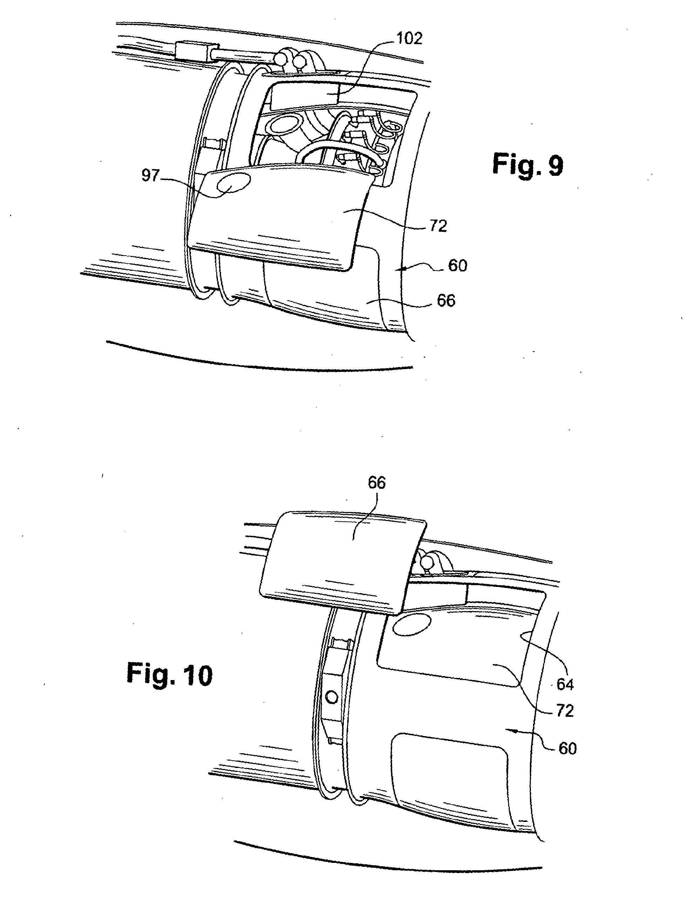

Le procédé consiste ensuite (figure 9) à mettre en place et à fixer les panneaux amovibles 72 sur l'ossature 70 de la paroi interne de manière à obturer les fenêtres 90 de cette ossature, puis enfin à fermer par les panneaux amovibles 66 les ouvertures 64 de la structure de support 62 (figure 10).

Le procédé de démontage de la conduite de soufflante selon l'invention consiste à répéter les étapes précitées dans l'ordre inverse.

Pour réaliser des opérations de maintenance des équipements montés sur le corps du turboréacteur, tels notamment que des injecteurs 110 de carburant et des vérins 112 de commande d'aubes à calage variable (figure 5), il suffit seulement de démonter et retirer les panneaux 66 de la paroi externe puis de démonter et d'enlever les panneaux 72 de la paroi interne à travers les ouvertures 64 de la paroi externe.

## Revendications

1. Conduite de soufflante pour une turbomachine, comprenant deux parois cylindriques coaxiales (68, 60), respectivement interne et externe, destinées à être fixées à une extrémité sur un carter intermédiaire (30) de la turbomachine et à être reliées à leur autre extrémité à un carter d'échappement (44) de la turbomachine, **caractérisée en ce que**, pour faciliter le montage de la conduite et permettre un accès à des équipements montés sur le corps de la turbomachine, la paroi cylindrique interne (68) est constituée de panneaux amovibles (72) fixés sur une ossature (70) comprenant une structure annulaire amont (82), une structure annulaire aval (84) et des éléments longitudinaux (86) de liaison de ces structures, et **en ce que** la paroi cylindrique externe (60) comporte des ouvertures (64) fermées par des panneaux (66) fixés de façon amovible sur une structure unitaire (62) de support, ces ouvertures ayant des dimensions permettant le passage des panneaux (72) de la paroi interne et le montage et le démontage de ces panneaux sur l'ossature (70) de la paroi interne.

2. Conduite de soufflante selon la revendication 1, **caractérisée en ce que** la structure unitaire (62) de support de la paroi externe (60) est une structure rigide servant à la transmission d'efforts entre la turbomachine et un avion équipé de cette turbomachine.

3. Conduite de soufflante selon la revendication 1 ou 2, **caractérisée en ce que** l'ossature (70) et les panneaux (72) de la paroi interne sont en tôle.

4. Conduite de soufflante selon l'une des revendications précédentes, **caractérisée en ce que** la structure de support (62) de la paroi externe (60) comprend des anneaux amont (74) et aval (76) reliés rigidement par des montants longitudinaux (78) délimitant entre eux les ouvertures (64) précitées.

5. Conduite de soufflante selon la revendication 4, **caractérisée en ce que** les montants (78) sont au nombre de quatre et répartis à 90° les uns des autres autour de l'axe longitudinal (80) de la paroi externe (60).

6. Conduite de soufflante selon la revendication 4 ou 5, **caractérisée en ce que** certains au moins des montants (78) comportent des orifices (81) de montage de bras (102) de passage de servitudes (104).

7. Conduite de soufflante selon la revendication 6, **caractérisée en ce que** les éléments longitudinaux (86) de liaison de la paroi interne (60) comprennent des orifices (96) de montage des bras (102), ces orifices étant alignés radialement avec les orifices (81) des montants (78) de la paroi externe.

8. Conduite selon l'une des revendications précédentes, **caractérisée en ce que** les panneaux amovibles (72) de la paroi interne (68) sont radialement alignés avec les ouvertures (64) de la paroi externe (60).

9. Conduite selon l'une des revendications précédentes, **caractérisée en ce que** la paroi externe (60) comprend un anneau aval (100) fixé sur la structure de support (62) et comportant des biellettes (98) de liaison avec le carter d'échappement (44) de la turbomachine.

10. Turbomachine, telle qu'un turboréacteur d'avion, **caractérisée en ce qu'**elle comprend une conduite de soufflante selon l'une des revendications précédentes.

11. Turbomachine selon la revendication 10, **caractérisée en ce que** les extrémités amont des parois interne (68) et externe (60) de la conduite sont fixées sur des brides annulaires du carter intermédiaire (30) de la turbomachine, et **en ce que** l'extrémité aval de la paroi interne est fixée sur une bride amont du carter d'échappement (44) par des pattes radiales (92) laissant un espace annulaire de ventilation autour du carter d'échappement.

12. Turbomachine selon la revendication 10 ou 11, **caractérisée en ce que** l'extrémité aval de la paroi externe (60) est reliée au carter d'échappement (44) par des biellettes (98) permettant une dilatation axiale et radiale de ce carter en fonctionnement.

13. Turbomachine selon l'une des revendications 10 à 12, **caractérisée en ce que** l'extrémité aval de la paroi externe (60) est fixée à un inverseur de poussée s'étendant autour du carter d'échappement.

14. Procédé de montage d'une conduite de soufflante selon l'une des revendications 1 à 9 dans une turbomachine telle qu'un turboréacteur d'avion, **caractérisé en ce qu'**il consiste :
- à fixer sur une bride du carter intermédiaire (30) la structure annulaire amont (82) de la paroi interne (68), puis à fixer sur une bride du carter d'échappement (40) la structure annulaire aval (84) de la paroi interne, et à relier ces structures par des éléments longitudinaux (86) de liaison,
- puis à mettre en place la structure unitaire (62) de support de la paroi externe (60), par translation axiale d'aval en amont, et à fixer l'extrémité amont de cette structure sur une bride annulaire du carter intermédiaire (30),
- à monter les servitudes (104) et leurs bras de passage (102) dans les orifices (96, 81) correspondants des parois interne et externe,
- à mettre en place et à fixer sur l'extrémité aval de la paroi externe l'anneau (100) comportant les biellettes (98) de liaison avec le carter d'échappement (44), puis à mettre en place et à fixer des tôles de capotage (94) autour des biellettes sur l'extrémité aval de la paroi interne,
- à mettre en place les panneaux (72) de la paroi interne, par passage à travers les ouvertures (64) de la paroi externe, et à les fixer, puis à mettre en place et à fixer les panneaux (66) de la paroi externe.

## Claims

1. A fan duct for a turbomachine, comprising two coaxial cylindrical walls (68,60), these being an internal wall and an external wall, respectively, which are intended to be attached at one end to an intermediate case (30) of the turbomachine and to be connected at their other end to an exhaust case (44) of the turbomachine, wherein, to make it easier to mount the duct and allow access to equipment mounted on the spool of the turbomachine, the internal cylindrical wall (68) is made up of removable panels (72) attached to a framework (70) comprising an upstream annular structure (82), a downstream annular structure (84) and longitudinal elements (86) connecting these structures, and wherein the external cylindrical wall (60) comprises openings (64) closed by panels (66) attached removably to a single support structure (62), these openings having dimensions that allow the panels (72) of the internal wall through and which allow these panels to be mounted on and removed from the framework (70) of the internal wall.

2. The fan duct as claimed in claim 1, wherein the single support structure (62) of the external wall (60) is a rigid structure used to transmit load between the turbomachine and an airplane fitted with this turbomachine.

3. The fan duct as claimed in claim 1 or 2, wherein the framework (70) and the panels (72) of the internal wall are made of sheet.

4. The fan duct as claimed in one of the preceding claims, wherein the support structure (62) of the external wall (60) comprises an upstream ring (74) and a downstream ring (76) which are rigidly connected by longitudinal members (78) defining the aforementioned openings (64) between them.

5. The fan duct as claimed in claim 4, wherein the members (78) are four in number distributed 90° apart about the longitudinal axis (80) of the external wall (60).

6. The fan duct as claimed in claim 4 or 5, wherein at least some of the members (78) comprise orifices (81) for mounting arms (102) through which auxiliaries (104) can pass.

7. The fan duct as claimed in claim 6, wherein the longitudinal connecting elements (86) of the internal wall (60) comprise orifices (96) for mounting the arms (102), these orifices (81) being radially aligned with the orifices in the members (78) of the external wall.

8. The duct as claimed in one of the preceding claims, wherein the removable panels (72) of the internal wall (68) are radially aligned with the openings (64) in the external wall (60).

9. The duct as claimed in one of the preceding claims, wherein the external wall (60) comprises a downstream ring (100) fixed to the support structure (62) and comprising link rods (98) for connecting to the exhaust case (44) of the turbomachine.

10. A turbomachine, such as an airplane turbojet, and which comprises a fan duct as claimed in one of the preceding claims.

11. The turbomachine as claimed in claim 10, wherein the upstream ends of the internal wall (68) and external wall (60) of the duct are attached to annular flanges of the intermediate case (30) of the turbomachine, and wherein the downstream end of the internal wall is attached to an upstream flange of the exhaust case (44) by radial lugs (92) leaving an annular ventilation space around the exhaust case.

12. The turbomachine as claimed in claim 10 or 11, wherein the downstream end of the external wall (60) is connected to the exhaust case (44) by link rods (98) allowing this case to expand axially and radially in operation.

13. The turbomachine as claimed in one of claims 10 to 12, wherein the downstream end of the external wall (60) is attached to a thrust reverser extending around the exhaust case.

14. A method of mounting a fan duct as claimed in one of claims 1 to 9 in a turbomachine such as an airplane turbojet, and which consists:
- in attaching the upstream annular structure (82) of the internal wall (68) to a flange of the intermediate case (30), then in fixing the downstream annular structure (84) of the internal wall to a flange of the exhaust case (40), and in connecting these structures using longitudinal connecting elements (86),
- then in fitting the individual support structure (62) of the external wall (60), by axial translation in the direction from downstream to upstream, and in attaching the upstream end of this structure to an annular flange of the intermediate case (30),
- in mounting the auxiliaries (104) and their through-arms (102) in the corresponding orifices (96,81) in the internal and external walls,
- in fitting the ring (100) comprising the link rods (98) for connecting to the exhaust case (44) on the downstream end of the external wall and attaching it thereto, then in fitting the cowling sheets (94) that surround the link rods on the downstream end of the internal wall and attaching them thereto,
- in fitting the panels (72) of the internal wall, by passing them through the openings (64) in the external wall, and in attaching them, then fitting and attaching the panels (66) of the external wall.

## Patentansprüche

1. Strömungskanal für eine Turbo- bzw. Strömungsmaschine, enthaltend zwei koaxial verlaufende zylindrische Wandungen (68, 60), nämlich eine innere und eine äußere, die dazu bestimmt sind, mit dem einen Ende an ein Zwischengehäuse (30) der Turbomaschine befestigt und mit ihrem anderen Ende mit einem Ausströmgehäuse (44) der Turbomaschine verbunden zu werden, **dadurch gekennzeichnet, dass** zum Erleichtern der Montage des Kanals und für einen Zugang zu den am Gehäuse der Turbomaschine montierten Vorrichtungen die zylindrische Innenwand (68) aus abnehmbaren Platten (72) besteht, die an einem Gerippe (70) befestigt sind, das eine stromaufwärtige bzw. vordere Ringstruktur (82), eine stromabwärtige bzw. hintere Ringstruktur (84) und längs verlaufende Verbindungsteile (86) zum Verbinden dieser Strukturen aufweist, und dass die zylindrische Außenwand (60) Öffnungen (64) aufweist, die von Platten (66) verschlossen werden, die abnehmbar an einer einheitlichen Tragstruktur (62) befestigt sind, wobei diese Öffnungen Abmessungen haben, die den Durchtritt der Platten (72) der Innenwand und das Montieren und Abmontieren dieser Platten an bzw. von dem Gerippe (70) der Innenwand gestatten.

2. Strömungskanal nach Anspruch 1, **dadurch gekennzeichnet, dass** die einheitliche Tragstruktur (62) zum Tragen der Außenwand (60) eine starre Struktur ist, die der Übertragung von Kräften zwischen der Turbomaschine und einem mit dieser Turbomaschine ausgestatteten Flugzeug dient.

3. Strömungskanal nach Anspruch 1 oder 2, **dadurch gekennzeichnet, dass** das Gerippe (70) und die Platten (72) der Innenwand aus Blech bestehen.

4. Strömungskanal nach einem der vorangehenden Ansprüche, **dadurch gekennzeichnet, dass** die Tragstruktur (62) zum Tragen der Außenwand (60) einen stromaufwärtigen Ring (74) und einen stroinabwäitigen Ring (76) aufweist, die über längs verlaufende Stützen (78) starr verbunden sind, welche die vorgenannten Öffnungen (64) zwischen sich begrenzen.

5. Strömungskanal nach Anspruch 4, **dadurch gekennzeichnet, dass** die Stützen (78) in einer Anzahl von vier vorliegen und über 90° zueinander um die Längsachse (80) der Außenwand (60) herum verteilt angeordnet sind.

6. Strömungskanal nach Anspruch 4 oder 5, **dadurch gekennzeichnet, dass** zumindest bestimmte der Stützen (78) Bohrungen (81) zum Montieren von Armen (102) für das Durchführen von Leitungen (104) aufweisen.

7. Strömungskanal nach Anspruch 6, **dadurch gekenntzeichnet, dass** die längs verlaufenden Verbindungsteile (86) zum Anfügen der Innenwand (60) Bohrungen (96) zum Montieren der Arme (102) aufweisen, wobei diese Bohrungen radial mit den Bohrungen (81) der Stützen (78) der Außenwand ausgerichtet sind.

8. Kanal nach einem der vorangehenden Ansprüche, **dadurch gekennzeichnet, dass** die abnehmbaren Platten (72) der Innenwand (68) radial mit den Öffnungen (64) der Außenwand (60) ausgerichtet sind.

9. Kanal nach einem der vorangehenden Ansprüche, **dadurch gekennzeichnet, dass** die Außenwand (60) einen stromabwärtigen Ring (100) aufweist, der an der Tragstruktur (62) befestigt ist und Schwenkarme (98) zum Verbinden mit dem Ausströmgehäuse (44) der Turbomaschine aufweist.

10. Turbomaschine, wie etwa Turbostrahltriebwerk für Flugzeuge, **dadurch gekennzeichnet, dass** sie einen Strömungskanal nach einem der vorangehenden Ansprüche aufweist.

11. Turbomaschine nach Anspruch 10, **dadurch gekennzeichnet, dass** die stromaufwärtigen Enden der Innenwand (68) und der Außenwand (60) des Kanals an ringförmigen Flanschen des Zwischengehäuses (30) der Turbomaschine befestigt sind und dass das stromabwärtige Ende der Innenwand an einem stromaufwärtigen Flansch des Ausströmgehäuses (44) über radial verlaufende Laschen (92) befestigt ist, die einen ringförmigen Ventilationsraum um das Ausströmgehäuse herum freilassen.

12. Turbomaschine nach Anspruch 10 oder 11, **dadurch gekennzeichnet, dass** das stromabwärtige Ende der Außenwand (60) mit dem Ausströmgehäuse (44) über Schwenkarme (98) verbunden ist, die im Betrieb eine axiale und radiale Ausdehnung dieses Gehäuses gestatten.

13. Turbomaschine nach einem der Ansprüche 10 bis 12, **dadurch gekennzeichnet, dass** das stromabwärtige Ende der Außenwand (60) an einem Schubumlenker befestigt ist, der sich um das Ausströmgehäuse herum erstreckt.

14. Verfahren zum Montieren eines Strömungskanals nach einem der Ansprüche 1 bis 9 an einer Turbomaschine, wie etwa einem Turbostrahltriebwerk für Flugzeuge, **dadurch gekennzeichnet, dass** es darin besteht
- an einem Flansch des Zwischengehäuses (30) die stromaufwärtige Ringstruktur (82) der Innenwand (68) zu befestigen, dann an einem Flansch des Ausströmgehäuses (40) die stromabwärtige Ringstruktur (84) der Innenwand zu befestigen und diese Strukturen über längs verlaufende Verbindungsteile (86) zu verbinden,
- dann die einheitliche Tragstruktur (62) zum Tragen der Außenwand (60) durch axiales Verschieben von stromabwärts nach stromaufwärts einzusetzen und das stromaufwärtige Ende dieser Struktur an einem ringförmigen Flansch des Zwischengehäuses (30) zu befestigen,
- die Leitungen (104) und deren Durchtrittsarme (102) in den entsprechenden Bohrungen (96, 81) der Innenwand und der Außenwand zu montieren,
- am stromabwärtigen Ende der Außenwand den Ring (100) einzusetzen und zu befestigen, der die Schwenkarme (98) zum Verbinden mit dem Ausströmgehäuse (44) aufweist, dann Verlcleiduugsbleche (94) um die Schwenkarme herum an dem stromabwärtigen Ende der Innenwand einzusetzen und zu befestigen,
- die Platten (72) der Innenwand durch Einführen durch die Öffnungen (64) der Außenwand hindurch einzusetzen und sie zu befestigen, wonach die Platten (66) der Außenwand eingesetzt und befestigt werden.
